(19) Europäisches Patentamt
European Patent Office
Office européen des brevets

(11) **EP 4 241 049 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **21801508.9**

(22) Anmeldetag: **27.10.2021**

(51) Internationale Patentklassifikation (IPC):
**G01D 18/00** *(2006.01)* **G01K 11/00** *(2006.01)*
**G01K 19/00** *(2006.01)* G01N 22/04 *(2006.01)*

(52) Gemeinsame Patentklassifikation (CPC):
**G01D 18/00; G01D 18/008; G01K 11/006;**
**G01K 19/00;** G01N 22/04

(86) Internationale Anmeldenummer:
**PCT/EP2021/079813**

(87) Internationale Veröffentlichungsnummer:
**WO 2022/096342 (12.05.2022 Gazette 2022/19)**

(54) **VERFAHREN ZUR KALIBRATION EINER MESSEINRICHTUNG**

METHOD OF CALIBRATING A MEASURING DEVICE

PROCÉDÉ D'ÉTALONNAGE D'UN DISPOSITIF DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2020 DE 102020128966**

(43) Veröffentlichungstag der Anmeldung:
**13.09.2023 Patentblatt 2023/37**

(73) Patentinhaber: **TEWS Elektronik GmbH & Co. KG 22459 Hamburg (DE)**

(72) Erfinder: **RICHTER, Hendrik 20255 Hamburg (DE)**

(74) Vertreter: **Hauck Patentanwaltspartnerschaft mbB Postfach 11 31 53 20431 Hamburg (DE)**

(56) Entgegenhaltungen:
WO-A2-2009/065568    DE-A1- 102007 057 092
US-A1- 2003 121 754    US-A1- 2003 121 755

**Beschreibung**

Die vorliegende Erfindung betrifft ein Verfahren zur Kalibration einer Messeinrichtung für mehrere Produkte.

Messeinrichtungen aller Art müssen vor einer Inbetriebnahme kalibriert werden. Im Rahmen dieser Kalibration wird für einen Kalibrationsansatz, beispielsweise für einen linearen Ansatz, die Kalibrationsparameter bestimmt, indem zu gegebenen Messwerten und zugehörigen Referenzwerten eine möglichst gute Übereinstimmung gesucht wird. Kalibrationsvorgänge und die damit verbundene Bestimmung eines Satzes von Kalibrationsparametern ist grundsätzlich bekannt. In der Regel können die Kalibrationsvorgänge auch automatisch durchgeführt werden.

Mögliche Unterschiede zwischen Kalibrationsbeziehungen von unterschiedlichen Produkten werden beispielsweise bei der Mikrowellen-Feuchtemesstechnik bisher dadurch berücksichtigt, dass die Messeinrichtung für jedes Produkt unabhängig von den anderen Produkten kalibriert wird. Für alle Produkte ist dadurch der gleiche Aufwand für die Kalibration erforderlich. Hinzu kommt, dass jede Einzelkalibration der gleichen Anfälligkeit gegenüber möglichen Mängeln des Datensatzes unterliegt, wie beispielsweise statistische Ausreißer in der Messung, unzureichende Varianz der Referenzwerte oder eine zu geringe Anzahl von Messpunkten. Ein häufig gewählter Ansatz zur Kalibration ist die multilineare Regression, bei der zwischen den Messgrößen $x_j$ des Messsystems und der Referenzgröße y ein linearer Zusammenhang angenommen wird:

$$y \quad = c_1 x_{1,i} + c_2 x_{2,i} + \cdots + c_{n,i} + \epsilon_i$$

$$_{(i:} \text{ Index der Einzelmessung} \in \mathbb{N}_{)}.$$

Bei diesem Ansatz hat sich die Sprechweise eingebürgert, die Faktoren als Gewichte zu bezeichnen und die additive Konstante als Offset-Wert. Der Epsilon-Wert bezeichnet die bei der Messung auftretenden Messfehler. Bei der Feuchtemesstechnik mit Hilfe von Mikrowellen sind die Messgrößen beispielsweise die Verbreiterung der Resonanzkurve, die Verschiebung der Resonanzfrequenz, ein Feuchtewinkel, ein Temperaturwert und dergleichen. Die Referenzgrößen sind für ein solches Messsystem beispielsweise Feuchte und Dichte des gemessenen Gegenstandes.

Die vorstehende Gleichung zur linearen Regression hat sich in Matrixschreibweise bewährt, wobei sich hier der folgende Ausdruck ergibt:

$$\vec{y} = X \cdot \vec{c} + \vec{\epsilon}$$

mit der Matrix X

$$X = \begin{pmatrix} x_{1,1} \, x_{2,1} & \cdots & x_{j,1} \\ \vdots & \ddots & \vdots \\ x_{1,N} \, x_{2,N} & \cdots & x_{j,N} \end{pmatrix}$$

und dem Verktor $\vec{c}$

$$\vec{c} = \left( c_1, c_2, \cdots, c_j \right)^T$$

Die Kalibrationsparameter unterscheiden sich hierbei in die Gewichte $c_i$, die jeweils mit dem Messwert multipliziert werden und in einen Offset-Wert $c_n$, der unabhängig von den Messwerten $x_i$ zu einer Verschiebung führt. Die Kalibrationsparameter bestimmen sich wie folgt:

$$\vec{c} = (X^T X)^{-1} (X^T \vec{y})$$

Dieser Ansatz zur Bestimmung der Kalibrationsparameter geht von dem vorstehenden linearen Kalibrationsmodell aus und bestimmt für dieses die Kalibrationsparameter. Der Vektor $\vec{\epsilon}$ wird anschließend nach der Bestimmung der Kalibrationsgewichte in an sich bekannter Weise beispielsweise über eine Residualmatrix bestimmt.

Zur Überprüfung hat es sich in der Regel eingebürgert, die Signifikanz der Kalibrationsparameter zu bestimmen. Das Maß, das für diese Überprüfung dient, ist der sogenannte p-Wert. Dieser ist in der Testtheorie ein Evidenzmaß für die Glaubwürdigkeit einer Nullhypothese. Die Nullhypothese besteht für jeden Kalibrationsparameter in der Annahme, dass sein Wert null sei. Für einen p-Wert größer als beispielsweise 5 % wird der Einfluss der Messgröße auf die Zielgröße als nicht signifikant angesehen und der entsprechende Kalibrationsparameter aus dem vorstehenden Ansatz verworfen.

Dieser Prozess wird als sogenannte "*Feature Selection*" iterativ vorgenommen. Das Ziel der iterativen Kalibration ist dann erreicht, wenn alle nicht signifikanten Beobachtungsgrößen $x_j$ aus dem Kalibrationsmodell entfernt wurden. Konvention ist, dabei erst Messgrößen höherer Ordnung, wie beispielsweise quadratische Abhängigkeiten zu testen und zuletzt die Terme nullter Ordnung zu entfernen.

Aus DE 10 2007 057 092 A1 ist ein Verfahren zur Feuchte- und/oder Dichtemessung in einem Messgut mit einem Mikrowellensender, einem Mikrowellenempfänger und einer Auswerteeinheit bekannt. Bei dem Messverfahren wird für eine Anzahl von Frequenzen die Phase und die Amplitude der durch das Messgut transmittierten Mikrowellenstrahlung bestimmt, wobei aus den bestimmten Werten unter Verwendung der komplexwertigen Übertragungsfunktion der Messanordnung die komplexwertige Transmissionsfunktion des Messguts berechnet und in den Zeitbereich als komplexwertige Zeitbereichsfunktion transformiert wird. Aus der Zeitbereichsfunktion wird der Zeitpunkt des Maximalwerts des Hauptpulses als Kenngröße A und die Breite des Hauptpulses als Kenngröße B bestimmt. Feuchte und Dichte des Messguts werden abhängig von den Kenngrößen A und B bestimmt. Aus DE 102 53 822 A1 ist ein Verfahren und eine Vorrichtung zur automatischen Sensorkalibrierung bekannt. Hierbei werden Labormessungen durchgeführt, die daraus gewonnenen Labormessdaten werden zur Korrektur der von den Sensoren erzeugten Online-Messwerte verwendet.

Aus dem Dokument US 2003/121755 A1 ist ein Verfahren zur Kalibrierung von Echtheitsprüfgeräten für Banknoten und Münzen bekannt, bei dem aus ermittelten Messwerten Kalibrationsdaten und Kriterien für eine Klassifizierung abgeleitet werden.

Der Erfindung liegt die Aufgabe zugrunde, ein Verfahren zur Kalibration einer Messeinrichtung bereitzustellen, das geeignet ist, den Vorgang der Kalibration für mehrere Produkte dahingehend zu vereinfachen, dass Zusammenhänge in den Daten für unterschiedliche Produkte erkannt werden.

Erfindungsgemäß wird die Aufgabe durch das Verfahren mit den Merkmalen aus Anspruch 1 gelöst. Vorteilhafte Ausgestaltungen bilden die Gegenstände der Unteransprüche.

Das erfindungsgemäße Verfahren ist vorgesehen und bestimmt zur Kalibration einer Messeinrichtung für mehrere Produkte. Erfindungsgemäß besitzt das Verfahren die Merkmale aus Anspruch 1. Das erfindungsgemäße Verfahren sieht vor, dass ein Menge von Referenzgrößen Y bereitgestellt wird. Die bereitgestellte Menge von Referenzgrößen enthält mindestens eine durch die Messgrößen zu bestimmende Referenzgröße. Wie bei jedem Kalibrationsvorgang wird eine Menge von Messgrößen gemessen. Hierbei können die einzelnen Messgrößen je nach Typ unterschieden werden. Ferner kann unterschieden werden, für welches Produkt die Messgrößen aufgezeichnet wurden und bei welcher der Messungen die Messgröße gemessen wurde. Es entsteht also eine Menge von Messwerten ($X^p = \{x^p_{i,j}\}$), wobei mit j eine oder mehrere Messgrößen, mit p die gemessenen Produkte und mit i mehrere Messungen durchgezählt werden. Zu der Menge an Messwerten wird eine Menge von Referenzgrößen ($Y^p = \{y^p_i$ i-te Referenzgröße$\}$) mit mindestens einer durch die Messgrößen ($x^P_{i,j}$) zu bestimmenden Referenzgröße (Y).

Das erfindungsgemäße Verfahren sieht weiter vor, dass die Messgrößen für alle Produkte zu einer erweiterten Menge von Messwerten zusammengefasst werden. In einem nächsten Schritt wird ein erster Satz von Kalibrationsparametern bereitgestellt, der für ein oder mehrere Produkte ein oder mehrere Gewichte besitzt. Das eine oder die mehreren Produkte werden innerhalb einer Produktfamilie zusammengefasst, wenn sie mindestens ein gleiches Gewicht für ihre Produkte aufweisen. Ein gleiches Gewicht bedeutet, dass die Gewichtswerte nicht signifikant voneinander verschieden sind. Das erfindungsgemäße Verfahren sieht ferner vor, dass mindestens ein weiterer Satz von Kalibrationsparametern für eine Teilmatrix der erweiterten Matrix der Messwerte bestimmt wird. Hierzu kann innerhalb der ersten Produktfamilie ein oder mehrere Sätze mit weiteren Gewichten bestimmt und mehrere Produkte mit gleichen Gewichten zu einer weiteren Produktfamilie zusammengefasst werden. Es werden also Unterproduktfamilien zu der ersten Produktfamilie gebildet. Außerhalb der ersten Produktfamilie werden weitere Sätze mit weiteren Gewichten bestimmt und ein oder mehrere Pruodukte mit gleichen Gewichten zu einer weiteren Produktfamilie zusammengefasst. Es werden also Nebenproduktfamilien gebildet, die dann natürlich auch wieder Unterproduktfamilien bilden können. In den Produktfamilien werden das eine Gewicht oder die mehreren Gewichte vom Produkt unabhängig jeweils mit dem Messwert verknüpft. Der mindestens eine Offset-Wert wird zu der Verknüpfung aus Gewichten und Messwerten hinzu addiert. Für diesen Satz von Kalibrationsparametern wird für die erweitere Menge von Messwerten die Messvorrichtung kalibriert. Der besondere Gedanke der Erfindung liegt darin, dass die Messwerte für zwei oder mehr Produkte zusammengefasst und gleich behandelt werden.

Ein wichtiger Aspekt ist hierbei, dass vor der Kalibration nicht bekannt ist, welche Produkte eines Datensatzes zu einer Produktfamilie gehören. Auch dieser Zusammenhang wird aus den Messwerten ermittelt. Dieser Ansatz ist zunächst erstaunlich, denn die eigentliche Erwartung ist, dass, je genauer das Produkt eingegrenzt und bestimmt ist, umso genauer kann die Messeinrichtung für dieses Produkt kalibriert werden. Im Hinblick auf möglicherweise auftretende Messungenauigkeiten oder statistische Schwankungen in den Messwerten ist dieser Ansatz aber nachteilig. Der besondere Vorteil des erfindungsgemäßen Ansatzes liegt darin, dass für die Produkte ein oder mehrere Gewichte gefunden werden können, die von der Art des Produkts innerhalb der Produktfamilie unabhängig sind. Diese produktunabhängigen Gewichte können im Rahmen des Kalibrationsvorgangs deutlich genauer bestimmt werden als Gewichte, die aufgrund ihrer Produktabhängigkeit nur über eine kleinere Datenbasis verfügen. Bei dem erfindungsgemäßen Verfahren sind die Produkte einer Produktfamilie gerade so beschaffen, dass mindestens eines der Gewichte für zwei oder mehr Produkte der Produktfamilie unabhängig von diesen bestimmt werden kann. Dies schließt auch den Fall ein, dass, falls zwei Messwerte für den Messvorgang zur Bestimmung der Ausgangsgröße benötigt werden, ein erstes Gewicht produktunabhängig und ein zweites Gewicht abhängig von den Produkten gewählt ist. In diesem Fall kann das produktunabhängige Gewicht statistisch deutlich genauer bestimmt werden als das produktabhängige Gewicht.

In einer Weiterführung des Verfahrens erfolgt die Verknüpfung der Gewichte mit den Messwerten durch Multiplikation. Dies führt insgesamt zu einem linearen Ansatz für die Bestimmung der Größen. Alternativ hierzu ist es auch möglich, die Gewichte über Polynome mit den Messwerten zu verknüpfen oder die Messwerte in Form von Produkten und/oder Quotienten mit einzubeziehen. Je nach gewähltem Ansatz können unterschiedliche Rechenverfahren zur Bestimmung des ersten und der weiteren Sätze von Kalibrationsparametern eingesetzt werden.

In einer bevorzugten Ausgestaltung wird die Signifikanz der bestimmten Kalibrationsparameter mit seinen Gewichten und/oder seinen Offset-Werten bestimmt. Dies erfolgt indem für die Gewichte und Offset-Werte bei verschiedenen Produkten keine Signifikanz für deren Ungleichheit festgestellt werden kann. Wenn die Ungleichheit nicht signifikant ist, dann können die Werte für Gewichte und Offsets gleichgesetzt werden. Für die Prüfung der Signifikanz bei den Gewichten und Offset-Werten wird eine Nullhypothese dahingehend formuliert, dass der Unterschied derWerte für zwei Produkte gleich null ist. Für das Eintreten dieser Nullhypothese wird die Wahrscheinlichkeit bestimmt. Bei dem Testen der Offset-Werte wird die Differenz zwischen zwei Offset-Werten oder zwei Gewichten für zwei Produkte gebildet. Als zu überprüfende Nullhypothese wird dann untersucht, dass die Differenz den Wert Null besitzt. Kann diese Nullhypothese nicht abgelehnt werden, hat der Differenzparameter, also den Wert Null, so können beide Produkte der Produktfamilie bezüglich des untersuchten Kalibrationsparameters (Gewichte, Offset-Werte) gleichgesetzt werden.

Bei dem erfindungsgemäßen Verfahren werden die Kalibrationsparameter durch eine multi-lineare Regression bestimmt. Diese ist hinlänglich bekannt und kann zuverlässig durchgeführt werden. Um die Unterscheidung der Produkte in den Daten durchzuführen, werden nichtnummerische, kategoriale Variablen eingefügt. Mit diesen wird beispielsweise angezeigt, dass die Messwerte zu unterschiedlichen Produkten gehören. In der erweiterten Datenmatrix dienen die nichtnummerischen, kategorialen Variablen als Dummy-Variablen zur Unterscheidung der Messwerte. Hierzu können in der erweiterten Matrix der Messwerte Spalten angehängt werden, die für einzelne Produkte eine "1" enthalten und andere Produkte durch eine "0" kennzeichnen.

In einer bevorzugten Weiterbildung ist die Mikrowellen-Messeinrichtung als ein Mikrowellenresonator ausgebildet, der eine Verschiebung seiner Resonanzfrequenz und/oder eine Verbreiterung seiner Resonanzkurve bestimmt. Ausgehend von diesen beiden Werten, können beispielsweise Werte zur Feuchte des Produktes bestimmt werden. Bevorzugt sind weitere Messgrößen, Temperatur und/oder Feuchtewinkel, die ebenfalls zu den Ausgangsgrößen, wie beispielsweise der Feuchte des Produkts beitragen.

Das erfindungsgemäße Verfahren wird nachfolgend an einem Ausführungsbeispiel näher erläutert. Das Ausführungsbeispiel bezieht sich hierbei auf die Feuchtemessung, wie sie mit Hilfe der Mikrowellenmesstechnik erfolgt. Unterschiedliche Produkte innerhalb einer Produktfamilie unterscheiden sich häufig nur leicht voneinander, sei es durch eine zusätzliche oder eine herausgelassene Zutat, eine unterschiedliche Blattposition am Stängel bei Pflanzen oder eine leicht veränderte Produktstruktur. Solche leichten Unterschiede und Variationen können zu leichten Abweichungen in der Wassermolekülbindung in dem Produkt und damit zu einer schwachen Änderung der Kalibrationskoeffizienten führen. Stärkere Variationen, beispielsweise durch weitere Zutaten, die sich in ihren dielektrischen Eigenschaften stark unterscheiden, können jedoch zu stärkeren Abweichungen in den Kalibrationsparametern führen. Die chemische bzw. physikalische Ähnlichkeit kann mit Hilfe einer angepassten Nullhypothese überprüft werden. Üblicherweise wird für den Test ein Signifikanzniveau, beispielsweise von 5 %, festgelegt und mit dem p-Wert verglichen. Je kleiner der p-Wert ist, desto mehr Grund gibt es, die Nullhypothese zu verwerfen. Ist der p-Wert kleiner als das vorgegebene Signifikanzniveau, so wird die Nullhypothese verworfen. Ist der p-Wert dagegen größer als das Signifikanzniveau, so kann die Nullhypothese nicht verworfen werden.

In den bekannten Ansätzen zur Kalibration einer Messeinrichtung, wird stets mit der Nullhypothese operiert, der Kalibrationsparameter $c_i$ eines Produkts der Produktfamilie unterscheidet sich nicht von Null. Es wird also getestet, ob die Hypothese, dass die dem Kalibrationsparameter zugeordnete Messgröße zu dem Ergebnis nichts beiträgt, eine wahrscheinliche Annahme ist. Diese Hypothese bei der Bestimmung der Kalibrationsparameter führt dazu, dass stets das Produkt einer Produktfamilie für sich isoliert betrachtet werden muss. Für jedes Produkt der Produktfamilie werden die Kalibrationsparameter bestimmt und anschließend auf ihre Signifikanz getestet.

Das erfindungsgemäße Verfahren arbeitet mit zusammengefassten Messgrößen, bei denen zwei oder mehr Produkte der Produktfamilie zu einer erweiterten Menge zusammengefasst sind. In diesem Fall wird bei der Signifikanzprüfung geschaut, ob der Unterschied der Kalibrationsparameter zweier Produkte der Produktfamilie sich signifikant von Null unterscheidet. Dies bedeutet, dass für diese beiden Produkte, wenn die Nullhypothese nicht verworfen werden kann, mit dem gleichen Kalibrationsparameter kalibriert werden kann. Für die beiden getesteten Produkte der Produktfamilie sind deren Kalibrationsparameter in diesem Sinne produktunabhängig und gleich.

Diese neue Nullhypothese ist schwächer als die herkömmliche Nullhypothese, weil bei der Kalibration die zusätzliche Information über die Ähnlichkeit der Mitglieder der Produktfamilie genutzt wird. Damit wird die Anforderung an die Qualität des Datensatzes heruntergesetzt und der Kalibrationsaufwand entsprechend reduziert. Diese Reduktion hat bei dem praktischen Einsatz der Messeinrichtung besondere Vorteile, denn bei einer geringfügigen Änderung der Produkte innerhalb einer Produktfamilie ist kein neuer Kalibrationsvorgang erforderlich, sondern die bereits gefundenen Kalibrationsparameter können zusammen mit den neuen Messwerten angepasst und bereits vorhandene Kalibrationsparameter möglicherweise trotz der Änderung des Produkts innerhalb der Produktfamilie weiterverwendet werden.

Zur Umsetzung des Gedankens ist es erforderlich, die für unterschiedliche Produkte gewonnenen Messwerte in einer erweiterten Menge der Messwerte zusammenzufassen. Ein möglicher Ansatz hierbei besteht in der sogenannten Dummy-Kodierung, die auch als Stellvertretervariable bezeichnet wird. Hierbei wird in der statistischen Datenanalyse eine Variable mit der Ausprägung 0 und 1 (Ja-/Nein-Variable) eingeführt, die als Indikator für das Vorhandensein einer mehrstufigen Variablen dient.

Um diese kategoriale Zuordnung mathematisch zu berücksichtigen, wird für jedes Mitglied aus der Produktfamilie sowie für jede Messgröße eine eigene Dummy-Variable eingeführt. Für den einfachsten Fall einer linearen Regression, mit identischen Gewichten und lediglich zwei Kategorien A und B, nimmt die Kalibrationsgleichung folgende Form an:

$$y_i = c_1 \cdot x_i + c_2 + \Delta c_2 \cdot \begin{Bmatrix} 0 \ f\ddot{u}r \ Kategorie \ A \\ 1 \ f\ddot{u}r \ Kategorie \ B \end{Bmatrix} + \varepsilon_i$$

.

Bei dieser Gleichung bezeichnet $c_1$ das Kalibrationsgewicht, mit dem die Messgröße $x_i$ zu der Ausgangsgröße yi beiträgt. Der Offset-Wert $c_2$ ist für Kategorie A und B als ein gemeinsamer Koeffizient formuliert. Hinzu kommt nun die kategoriale Unterscheidung zwischen den Kategorien A und B, wonach für die Kategorie A kein weiterer Offset-Wert beiträgt und für die Kategorie B der zusätzliche Offset-Wert $\Delta c_2$ hinzugefügt wird.

Die Größe $\varepsilon_i$ ist zusätzlich ein additiver Ausdruck, der mit yi als Ausgangsgröße gemeinsam auftritt und nicht von dem Messwert $x_i$ abhängt. Das Vorstehende zusammengefasst bedeutet für die Kategorie A:

$$y_i = c_1 \cdot x_i + c_2 + \varepsilon_i$$

und für die Kategorie B

$$y_i = c_1 \cdot x_i + c_2 + \Delta c_2 + \varepsilon_i$$

.

Mit diesen Dummy-Variablen ergibt sich eine erweiterte Datenmatrix einfach durch eine zusätzliche Spalte in folgender Form:

$$X = \begin{bmatrix} x_1^{(A)} & 1 & 0 \\ \vdots & \vdots & \vdots \\ x_{N_A}^{(A)} & 1 & 0 \\ x_1^{(B)} & 1 & 1 \\ \vdots & \vdots & \vdots \\ x_{N_B}^{(B)} & 1 & 1 \end{bmatrix}$$

In der Datenmatrix bewirkt die rechte Spalte, dass für die Messwerte der Kategorie A der Parameter $\Delta c$ mit null und die Messwerte der Kategorie B der Messwert $\Delta c$ mit 1 multipliziert werden. Die Epsilon-Größe $\varepsilon_i$ wird unabhängig von den Messwerten addiert, um die auftretenden Messfehler auszugleichen. Für diese neue Datenmatrix können für die Kalibrationsparameter die p-Werte berechnet werden. Da der neue Kalibrationsparameter $\Delta c_2$ die Differenz der Offset- Werte zweier Kategorien darstellt, gibt sein p-Wert Auskunft darüber, ob diese Differenz signifikant ist oder die beiden Offset-Werte zusammengefasst werden können. Dieses Schema lässt sich auf alle weiteren Kalibrationsparameter übertragen.

Für die weiteren Kalibrationsparameter kann zwischen einer inneren und einer äußeren Entwicklung unterschieden werden: Bei der inneren Entwicklung werden die noch nicht bestimmten Kalibrationsparameter innerhalb einer Produktfamilie weiterbestimmt. Dabei kann der Fall auftreten, dass hier wieder nichtsignifikant unterschiedliche Parameter auftreten, so dass innerhalb der Produktfamilie weitere Produktfamilie entstehen. Beispielsweise können die Produkte 1, 3 und 5 im Hinblick auf das erste Gewicht gleiche Werte, also nur unsignifikant verschiedene Werte aufweisen, im Hinblick auf das zweite Gewicht aber, können die Produkte 1 und 5 gleiche Werte aufweisen, während das Gewicht für Produkt 3 einen signifikant andere Wert aufweist. Neben der inneren Entwicklung gibt es auch eine äußere Entwicklung, bei der für noch nicht zu einer Produktfamilie zusammengefassten Produkten, beispielsweise Produkte 2 und 4 nach Kalibrationsparametern gesucht wird. Ist dann beispielsweise für die Produkte 2 und 4 ein gleicher Kalibrationsparameter gefunden, so kann dieser den Ausgangspunkt für eine innere Entwicklung bilden. Das Ergebnis der inneren und äußeren Entwicklung ist, dass so viele Produkte wie möglich in Produktfamilien zusammengefasst werden, wodurch die Anzahl der zu bestimmenden Kalibrationsparameter reduziert und die statistische Grundlage der Parameterbestimmung verbessert wird.

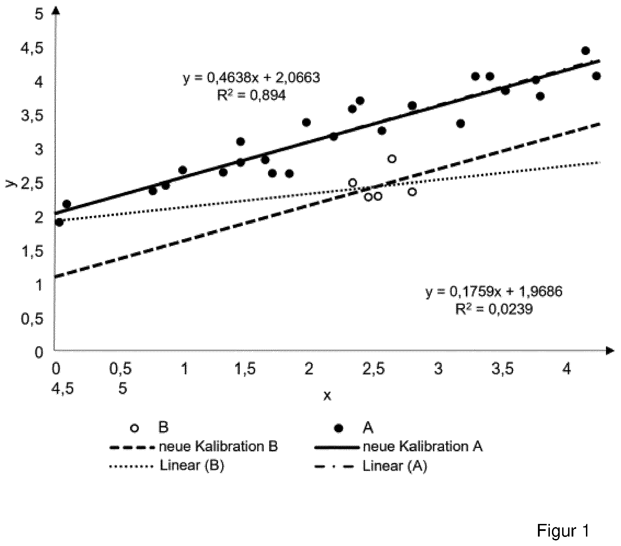

Das vorstehend beschriebene Verfahren mit der modifizierten Nullhypothese führt dazu, dass Ähnlichkeiten in den Daten erkannt und für die Kalibrierung genutzt werden. Mit der Erfindung wird zudem ein Verfahren vorgeschlagen, bei dem die Kalibrationsparameter unterschiedlicher Produkte zusammengelegt werden. Grundsätzlich ist es möglich, dass für Produkte der Kategorie A und der Kategorie B einige Kalibrationsparameter gleich und andere Kalibrationsparameter signifikant verschieden sind. Zur Vereinfachung des Verfahrens kann daher vorgesehen sein, dass für die Differenzparameter, die den höchsten p-Wert aufweisen, zu einer Gruppe zusammengelegt werden, wobei dann alle Kalibrationsparameter dieser beiden Produkte gleichgesetzt werden. Dieses Verfahren kann dann mit der um ein Produkt reduzierten Produktfamilie wiederholt werden, solange bis beispielsweise die Kalibrationsparameter produktfamilienübergreifend konstant sind. Die Erfindung sei nachfolgend anhand der Figur 1 näher erläutert. Für Figur 1 wurden zwei Datensätze nach folgenden Modellen simuliert:

$$y^{(A)} = 0{,}5 \cdot x^{(A)} + 2 + \varepsilon^{(A)}$$

,

$$y^{(B)} = 0{,}5 \cdot x^{(B)} + 1 + \varepsilon^{(B)}$$

.

Die Referenzunsicherheit $\varepsilon$ sei für beide Kategorien gleich verteilt mit $\varepsilon$ = +/- 0,26. Dies bedeutet, dass die Daten der beiden Kategorien sich lediglich in ihrem Offset-Wert um den Wert 1 unterscheiden, nicht aber in ihrer Steigung. Die Datensätze sind in Figur 1 dargestellt. Die oberen Datenpunkte, heller dargestellt, besitzen einen guten $R^2$-Wert von 0,894, der eine gute Modellanpassung zeigt. Die unteren, dunkel dargestellten Werte, besitzen einen $R^2$-Wert von 0,0239, was eine schlechte Anpassung, einen sogenannten '*poor model fit*' anzeigt. Dies bedeutet, dass der Datensatz B mit nur fünf Datenpunkten, die in einem schmalen Bereich zwischen 2,5 und 3,5 liegen von einer geringen Datenqualität ist und es damit nicht erlaubt, den Steigungsparameter hinreichend genau zu reproduzieren. Der Datensatz A mit seinen 25 Datenpunkten besitzt einen großen Wertebereich mit guter Qualität, wenngleich der Steigungsparameter aufgrund der relativ hohen Referenzunsicherheit nur 92 % der tatsächlichen Steigung erreicht (vgl. 0,4638 mit 0,5).

Der nach dem erfindungsgemäßen Verfahren ermittelte Steigungsparameter $c_1$ beträgt jedoch:

$$c_1 = 0{,}46.$$

Durch den großen Unterschied im Gewichtsfaktor ist er fast identisch mit dem Steigungswert aus der Kategorie A. Entsprechend ist die Differenz der Offset-Parameter $\Delta c_2$ mit 1 exakt getroffen, wenngleich beide Offset-Werte $c_2$ aufgrund des etwas zu kleinen Steigungsparameters zu groß sind.

Zusammengefasst sind die Datenwerte aus dem Beispiel in Figur1 in der folgenden Tabelle:

| Kategorie (k) | N | $\sigma_k^2$ | Gewichtsfaktor | $c_1^{(k)}$ | $c_1$ | $c_2^{(k)}$ |
|---|---|---|---|---|---|---|
| A | 25 | 2,05 | 49,3 | 0,46 | 0,46 | 2,1 |
| B | 5 | 0,04 | 0,17 | 0,18 | 0,46 | 1,1 |

Deutlich zu sehen ist, dass bei dem herkömmlichen Verfahren der Steigungsparameter $c_1$ produktabhängig einmal 0,46 und einmal 0,18 ist und damit die Steigung des Modells mit 0,5 nicht gut trifft. Die beiden rechten Koeffizienten der Tabelle werden nach dem erfindungsgemäßen Verfahren berechnet und treffen sowohl im Abstand des Offset-Werts als auch in der Höhe der Werte die Modellbildung deutlich besser.

Für die Praxis bedeutet dies, dass das Produkt B mit seinem Datensatz in geringer Qualität von der guten Qualität des Datensatzes des Produktes A profitiert und somit mit gleicher Qualität wie das Produkt A kalibriert ist.

**Patentansprüche**

1. Verfahren zur Kalibration einer Messeinrichtung für mehrere Produkte, das folgende Schritte aufweist:

   - Messen einer Menge von Messwerten ($X^p=\{x^p_{i,j}\}$) mit mehreren Messgrößen ($j > 1$), für mehrere Produkte (p) und mit mehreren Messungen (i),
   - Bereitstellen einer Menge von Referenzgrößen ($Y^p =\{y^p_i$ i-te Referenzgröße$\}$) mit mindestens einer durch die Messgrößen ($x^P_{i,j}$) zu bestimmenden Referenzgröße (Y),
   **gekennzeichnet durch**
   - Zusammenfassen der Messwerte ($X^p$) für alle Produkte zu einer erweiterten Datenmatrix der Messwerte ($X'$), an die nicht nummerische, kategoriale Variablen als Dummy-Variablen zur Unterscheidung der Messwerte angehängt sind,
   - Bestimmen eines ersten Satzes von Kalibrationsparametern ($C'$) aus den Messwerten ($X'$) der Datenmatrix, der für ein oder mehrere Produkte (p) ein oder mehrere Gewichte ($c^p_j$) besitzt, wobei das eine oder die mehreren Produkte (p) innerhalb einer Produktfamilie zusammengefasst werden, die mindestens für ihre Produkte ein gleiches Gewicht ($c_j$) aufweist, das vom Produkt unabhängig ist,
   - Bestimmen mindestens eines weiteren Satzes von Kalibrationsparametern ($C''$) für eine Teilmatrix der erweiterten Datenmatrix der Messwerte ($X'$) zur Kalibrierung der Messeinrichtung, wobei die nicht numerischen, kategorialen Variablen weiteren Gewichten des weiteren Satzes von Kalibrationsparametern ($C''$) zugeordnet sind, wobei

     ◦ innerhalb der ersten Produktfamilie ein oder mehrere Sätze mit weiteren Gewichten bestimmt und mehrere Produkte (p) mit gleichen Gewichten ($c^p_j$) zu einer weiteren Produktfamilie zusammengefasst werden und
     ◦ außerhalb der ersten Produktfamilie weitere Sätze mit weiteren Gewichten bestimmt und mehrere Produkte (p') mit gleichen Gewichten ($c^{p'}_j$) zu einer weiteren Produktfamilie zusammengefasst werden,
     ◦ solange bis alle Gewichte für die Kalibrierung der Messeinrichtung bestimmt sind.

2. Verfahren nach Anspruch 1, **dadurch gekennzeichnet, dass** die Gewichte des ersten Satzes und die weiteren Gewichte innerhalb und außerhalb der ersten Produktfamilie in einer vorbestimmten Reihenfolge ermittelt werden, wobei zuerst die Gewichte ermittelt werden, von welchen die Referenzgröße am schwächsten abhängt.

3. Verfahren nach Anspruch 1 oder 2, **dadurch gekennzeichnet, dass** zusätzlich zu den Gewichten auch ein oder mehrere Offset-Werte ($\Delta c$) bestimmt werden, die zu den mit den Gewichten multiplizierten Messwerten addiert werden.

4. Verfahren nach einem der Ansprüche 1 bis 3, **dadurch gekennzeichnet, dass** die Gewichte auch mit Polynomen der Messwerte verknüpft werden können, wobei auch für Produkte und/oder Quotienten von Messwerten Gewichte vorgesehen sein können.

5. Verfahren nach einem der Ansprüche 1 bis 4, **dadurch gekennzeichnet, dass** für die Gewichte und/oder Offset-Werte bei unterschiedlichen Produkten statistisch keine Signifikanz der Ungleichheit bestimmt wird und die unterschiedliche Produkte dann in einer Produktfamilie zu diesem Gewicht zusammengefasst werden, wenn die Ungleichheit nicht signifikant ist.

6. Verfahren nach einem der Ansprüche 1 bis 5, **dadurch gekennzeichnet, dass** die Kalibrationsparameter durch eine multi-lineare Regression bestimmt werden.

7. Verfahren nach einem der Ansprüche 1 bis 6, **dadurch gekennzeichnet, dass** die Teilmatrix der Messwerte für die Bestimmung der Kalibrationsparameter entsprechend der ersten Produktfamilie oder den weiteren Produktfamilien auf einer Teilmenge der Messwerte ($X^p$) bestimmt wird.

8. Verfahren nach Anspruch 6 oder 7, **dadurch gekennzeichnet, dass** für die Prüfung der Signifikanz der Offset-Werte eine Nullhypothese dahingehend formuliert wird, dass der Unterschied der Offset-Werte ($\Delta c$) zweier Produkte gleich Null ist.

9. Verfahren nach einem der Ansprüche 1 bis 8, **dadurch gekennzeichnet, dass** eine Mikrowellenmesseinrichtung kalibriert wird.

10. Verfahren nach Anspruch 9, **dadurch gekennzeichnet, dass** die Mikrowellenmesseinrichtung als ein Mikrowellenresonator ausgebildet ist, der eine Verschiebung der Resonanzfrequenz und/oder eine Verbreiterung einer Resonanzkurve bestimmt.

11. Verfahren nach Anspruch 9 oder 10, **dadurch gekennzeichnet, dass** weitere Messgrößen der Mikrowellenmesseinrichtung die Temperatur (T) und/oder der Feuchtewinkel ($\varphi$) sind.

**Claims**

1. Method for calibrating a measuring device for several products, comprising the following steps:

   - Measuring a set of measured values ($X^p = \{x^p_{i,j}\}$) with several measured variables (j > 1), for several products (p) and with several measurements (i),
   - Providing of a set of reference variables ($Y^p = \{y^p_i$ i-th reference variable$\}$) with at least one reference variable (Y) to be determined by the measured variables ($x^P_{i,j}$),
   **characterised by**
   - Summarising the measured values ($X^p$) for all products into an extended data matrix of the measured values($X'$), to which non-numerical, categorical variables are attached as dummy variables to differentiate between the measured values,
   - Determining a first set of calibration parameters ($C'$) from the measured values ($X'$) of the data matrix, which has one or more weights($c^p_j$) for one or more products (p), wherein the one or more products (p) are summarised within a product family which has an equal weight ($c_j$) for at least its products, which is independent of the product,
   - Determining at least one further set of calibration parameters ($C''$) for a sub-matrix of the expanded data matrix of the measured values (X') for calibrating the measuring device, the non-numerical, categorical variables being assigned further weights of the further set of calibration parameters($C''$), wherein

     ◦ one or more sets with further weights are determined within the first product family and several products (p) with the same weights($c^p_j$) are combined to form a further product family, and
     ◦ outside the first product family, further sets with further weights are determined and several products (p') with the same weights($c^{p'}_j$) are combined to form a further product family,
     ◦ until all weights have been determined for the calibration of the measuring device

2. Method according to claim 1, **characterised in that** the weights of the first set and the further weights inside and outside the first product family are determined in a predetermined sequence, the weights on which the reference variable is most weakly dependent being determined first.

3. Method according to claim 1 or 2, **characterised in that**, in addition to the weights, one or more offset values ($\Delta c$) are also determined, which are added to the measured values multiplied by the weights.

4. Method according to one of claims 1 to 3, **characterised in that** the weights can also be linked to polynomials of the measured values, whereby weights can also be provided for products and/or quotients of measured values.

5. Method according to one of claims 1 to 4, **characterised in that** no significance of the inequality is statistically determined for the weights and/or offset values for different products and the different products are then combined in a product family to form this weight if the inequality is not significant.

6. Method according to one of claims 1 to 5, **characterised in that** the calibration parameters are determined by a multilinear regression.

7. Method according to one of claims 1 to 6, **characterised in that** the sub-matrix of the measured values for determining the calibration parameters corresponding to the first product family or the further product families is determined on a subset of the measured values ($X^p$).

8. Method according to claim 6 or 7, **characterised in that** for testing the significance of the offset values, a null hypothesis is formulated to the effect that the difference in the offset values ($\Delta c$) of two products is zero.

9. Method according to one of claims 1 to 8, **characterised in that** a microwave measuring device is calibrated.

10. Method according to claim 9, **characterised in that** the microwave measuring device is designed as a microwave resonator which determines a shift in the resonant frequency and/or a broadening of a resonance curve.

11. Method according to claim 9 or 10, **characterised in that** further measured variables of the microwave measuring device are the temperature ($T$) and/or the humidity angle ($\varphi$).

**Revendications**

1. Procédé d'étalonnage d'un dispositif de mesure pour plusieurs produits, lequel présente les étapes suivantes :

   - mesure d'une quantité de valeurs de mesure ($X^P=\{x^P_{i,j}\}$) avec plusieurs grandeurs de mesure ($j > 1$), pour plusieurs produits (p) et avec plusieurs mesurages (i),
   - mise à disposition d'une quantité de grandeurs de référence ($Y^P=\{y^P_i$ ième grandeur de référence$\}$) avec au moins une grandeur de référence ($Y$) à déterminer par les grandeurs de mesure ($x^P_{i,j}$),
   **caractérisé par**
   - le regroupement des valeurs de mesure ($X^p$) pour tous les produits en une matrice de données élargie des valeurs de mesure ($X'$), à laquelle sont annexées des variables catégorielles non numériques en tant que variables muettes pour la différentiation des valeurs de mesure,
   - la détermination d'un premier ensemble de paramètres d'étalonnage ($C''$) à partir des valeurs de mesure ($X'$) de la matrice de données, lequel possède un ou plusieurs poids ( $c_j^p$ ) pour un ou plusieurs produits (p), dans lequel le ou les produits (p) sont regroupés dans une famille de produits, laquelle présente un même poids ($c_j$) au moins pour ses produits, lequel est indépendant du produit,
   - la détermination d'au moins un autre ensemble de paramètres d'étalonnage ($C''$) pour une matrice partielle de la matrice de données élargie des valeurs de mesure ($X'$) pour l'étalonnage du dispositif de mesure, dans lequel les variables catégorielles non numériques sont attribuées à d'autres poids de l'autre ensemble de paramètres d'étalonnage ($C''$), dans lequel

      ∘ dans la première famille de produits, un ou plusieurs ensembles avec d'autres poids sont déterminés et plusieurs produits (p) avec des mêmes poids ( $\acute{c}_j^p$ ) sont regroupés en une autre famille de produits et
      ∘ en dehors de la première famille de produits, d'autres ensembles avec d'autres poids sont déterminés et plusieurs produits (p') avec des mêmes poids ( $c_j^p$ ) sont regroupés en une autre famille de produits,
      ∘ jusqu'à ce que tous les poids soient déterminés pour l'étalonnage du dispositif de mesure.

2. Procédé selon la revendication 1, **caractérisé en ce que** les poids du premier ensemble et les autres poids dans la première famille de produits et en dehors de celle-ci sont établis dans un ordre prédéterminé, dans lequel les poids dont la grandeur de référence dépend le moins sont établis en premier.

3. Procédé selon la revendication 1 ou 2, **caractérisé en ce qu'**en plus des poids, une ou plusieurs valeurs de décalage ($\Delta c$) sont également déterminées, lesquelles sont ajoutées aux valeurs de mesure multipliées par les poids.

4. Procédé selon l'une des revendications 1 à 3, **caractérisé en ce que** les poids peuvent également être associés à des polynômes des valeurs de mesure, dans lequel des poids peuvent également être prévus pour des produits et/ou des quotients de valeurs de mesure.

5. Procédé selon l'une des revendications 1 à 4, **caractérisé en ce que** pour les poids et/ou les valeurs de décalage, aucune significativité de l'inégalité n'est déterminée statistiquement pour différents produits et les différents produits sont ensuite regroupés en ce poids dans une famille de produits, lorsque l'inégalité n'est pas significative.

6. Procédé selon l'une des revendications 1 à 5, **caractérisé en ce que** les paramètres d'étalonnage sont déterminés par une régression multilinéaire.

7. Procédé selon l'une des revendications 1 à 6, **caractérisé en ce que** la matrice partielle des valeurs de mesure pour la détermination des paramètres d'étalonnage est déterminée selon la première famille de produits ou les autres familles de produits sur une quantité partielle des valeurs de mesure ($X^P$).

8. Procédé selon la revendication 6 ou 7, **caractérisé en ce que** pour la vérification de la significativité des valeurs de décalage, une hypothèse zéro est formulée de telle manière que la différence des valeurs de décalage ($\Delta c$) entre deux produits est égale à zéro.

9. Procédé selon l'une des revendications 1 à 8, **caractérisé en ce qu'**un dispositif de mesure à microondes est étalonné.

10. Procédé selon la revendication 9, **caractérisé en ce que** le dispositif de mesure à microondes est conçu comme un résonateur à microondes, lequel détermine un décalage de la fréquence de résonance et/ou un élargissement d'une courbe de résonance.

11. Procédé selon la revendication 9 ou 10, **caractérisé en ce que** d'autres grandeurs de mesure du dispositif de mesure à microondes sont la température (T) et/ou l'angle d'humidité ($\varphi$).

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007057092 A1
- DE 10253822 A1
- US 2003121755 A1